# FASCICULE DE BREVET EUROPEEN

(11) **EP 1 163 625 B1**
(45) Date de publication et mention de la délivrance du brevet: **09.04.2003**
(21) Numéro de dépôt: 99961123.9
(22) Date de dépôt: 21.12.1999
(51) Int. Cl.: G06K 7/00

(54) **MAINTIEN D'UN CANAL AVEC ANTICOLLISION DANS UN SYSTEME D'IDENTIFICATION ELECTRONIQUE**
FESTHALTEN EINES KANALS MIT ANTIKOLLISION IN EINEM ELEKTRONISCHEN IDENTIFIZIERUNGSSYSTEM
MAINTENANCE OF AN ANTICOLLISION CHANNEL IN AN ELECTRONIC IDENTIFICATION SYSTEM

(30) Priorité: 22.01.1999 FR 9900721
(43) Date de publication de la demande: 19.12.2001
(73) Titulaire: Gemplus, 13881 Gémenos Cedex (FR)
(72) Inventeur: ENRICO, Marc, F-13010 Marseille (FR)
(86) Numéro de dépôt international: FR9903221
(87) Numéro de publication internationale: WO00043946

(56) Documents cités:
- EP-A- 0 585 132
- WO-A-98/52142

## Description

La présente invention concerne un système de communication entre un organe d'émission/réception interrogateur et une pluralité de transpondeurs.

La présente invention concerne également un procédé de fonctionnement d'un tel système de communication.

La présente invention s'applique à tout système de communication radiofréquence mais également à tout système de communication sans contact tel que infrarouge, c'est à dire tout système ne nécessitant pas de connexion physique des unités de communication entre elles.

Dans de tels systèmes, l'organe interrogateur émet des signaux selon un protocole établi vers les transpondeurs afin de les interroger. L'organe interrogateur est en outre apte à lire et interpréter le contenu des transpondeurs.

Un transpondeur est constitué par un émetteur-récepteur associé à un élément devant être identifié tel que véhicule, article de magasin, humain ou autre, et répondant automatiquement à un signal extérieur d'interrogation en provenance de l'organe interrogateur.

Un transpondeur comporte généralement un microcircuit connecté à une bobine formant antenne.

L'organe interrogateur est généralement constitué par un système fonctionnant par radiofréquence.

Il existe, dans l'état de la technique, de nombreux systèmes d'identification comportant un organe interrogateur et une pluralité de transpondeurs.

Le principal problème associé à ces systèmes d'identification réside dans la collision entre plusieurs signaux d'identification provenant de différents transpondeurs. Il est en effet possible qu'un transpondeur émettant un signal d'identification vers l'interrogateur soit interrompu par l'émission d'un autre signal d'identification provenant d'un autre transpondeur, ce qui altère la reconnaissance de chaque transpondeur.

Plusieurs systèmes d'anticollision associés à ces systèmes de communication ont été proposés dans l'art antérieur.

Ces systèmes d'anticollision sont généralement difficiles à mettre en oeuvre, ils sont souvent d'utilisation complexe et de coût élevé.

Des solutions pour remédier à ces désavantages ont été proposées dans l'état de la technique. Ainsi, le brevet européen EP-A 0 585 132 décrit un système d'anticollision associé à un système de communication beaucoup plus simple à mettre en oeuvre.

Le document WO 98 52142 propose d'émettre une commande de veille par l'interrogateur qui coupe le transpondeur actif et réactive les transpondeurs silencieux pour échanger des informations entre l'interrogateur et les transpondeurs.

Ce brevet expose deux principes permettant d'éviter la collision entre des signaux provenant de différents transpondeurs à destination de l'interrogateur.

Un premier principe anticollision relativement facile à mettre en oeuvre consiste à désynchroniser les transpondeurs.

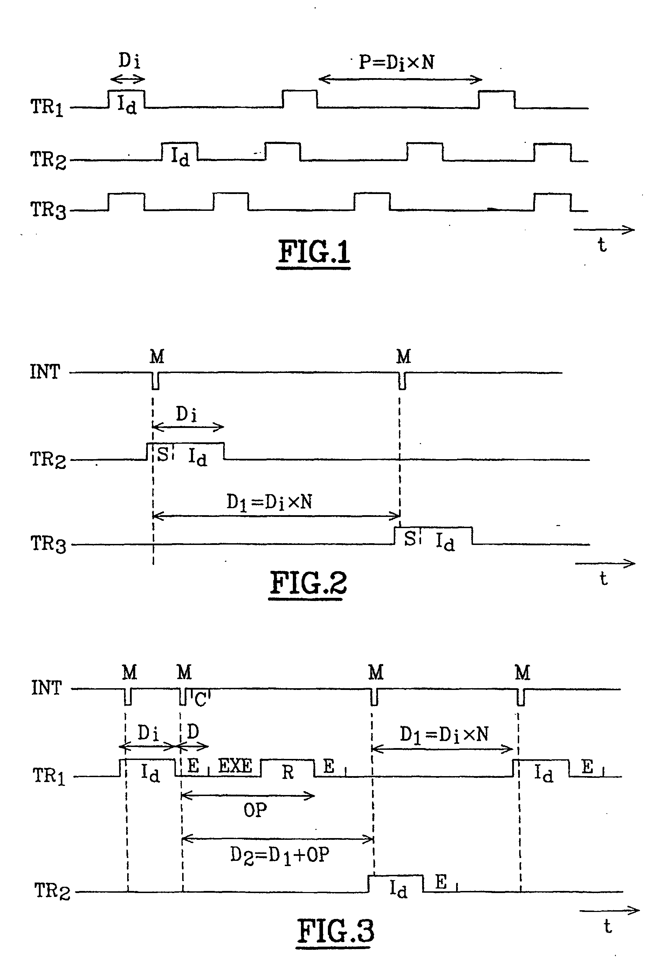

Selon ce principe, illustré sur la figure 1, chaque transpondeur TR présent dans le champ de détection d'un organe interrogateur émet son identifiant Id de façon cyclique avec des pauses P de durée aléatoire. Chaque temps de pause P est le résultat de la multiplication entre la durée d'émission de l'identifiant Di et un nombre aléatoire N. Chaque transpondeur TR fonctionne donc alternativement en mode émission et en mode pause.

Ainsi, l'émission désynchronisée des transpondeurs permet d'obtenir une ou plusieurs plages de temps dans lesquelles un seul transpondeur TR émet son identifiant Id. Comme cela est illustré sur la figure 1, les cas en grisés sont des situations où plusieurs transpondeurs émettent en même temps et alors aucun n'est correctement identifié par l'organe interrogateur. Dans les autres cas, un seul transpondeur émet pendant une plage de temps donnée et peut alors être correctement identifié.

Un second principe anticollision, également facile à mettre en oeuvre, est décrit dans le brevet cité ci dessus et illustré sur la figure 2.

Selon ce second principe, l'interrogateur émet en permanence un signal d'interrogation INT et les transpondeurs TR émettent chacun un signal d'identification Id de façon cyclique avec des pauses P aléatoires. L'interrogateur est en outre apte à détecter la trame de début de message S émise par un transpondeur donné TR, et à modifier simultanément son signal d'interrogation INT par une brève coupure M.

Ce second principe consiste à maintenir un canal anticollision ouvert entre l'organe interrogateur et un transpondeur donné pendant au moins toute la durée de l'émission du message d'identification Id. A cet effet, l'organe interrogateur est apte à détecter une trame de début de message S émise par un transpondeur TR et à imposer le silence aux autres transpondeurs afin de poursuivre la lecture de l'identifiant Id du transpondeur détecté sans perturbation due à l'émission d'un signal d'un autre transpondeur.

La modification M dans le signal d'interrogation INT est interprétée par les transpondeurs en pause comme une commande de silence alors qu'elle est transparente pour le transpondeur en cours d'émission.

Le transpondeur TR1 ayant déjà émis une trame de début de message S continue alors l'émission de son signal d'identification Id, et les autres transpondeurs TRn sont mis en veille afin de prolonger leur pause pendant un délai D1 correspondant à la durée d'émission de l'identifiant Di multipliée par un nombre aléatoire N.

La modification du signal d'interrogation permettant d'imposer le silence aux transpondeurs en mode pause consiste essentiellement dans une coupure du signal de quelques micro secondes (Mute en anglais). Cette coupure a pour effet de réinitialiser le comptage du temps de pause avec un nouveau nombre aléatoire N.

Le principe anticollision décrit dans ce brevet est fiable et facile à mettre en oeuvre.

Néanmoins, la description qui en est faite ne permet d'utiliser ce principe que sur des transpondeurs en lecture seule.

Plus précisément un tel principe anticollision ne permet pas de maintenir le canal anticollision ouvert entre l'organe interrogateur et le transpondeur pour la réalisation d'une opération d'écriture ou pour l'exécution d'une commande par le transpondeur.

La présente invention cherche à pallier à cet inconvénient.

Le but de la présente invention est par conséquent de proposer le maintien d'un canal anticollision ouvert entre un interrogateur et un transpondeur fonctionnant en lecture/écriture.

La présente invention a plus particulièrement pour objet un système de communication entre un organe interrogateur et une pluralité de transpondeurs,
l'organe interrogateur étant apte à détecter un début d'émission d'un transpondeur puis à modifier son signal d'interrogation de manière à maintenir les autres transpondeurs en état de veille,
les transpondeurs silencieux étant aptes à interpréter la modification du signal d'interrogation comme une commande de silence prolongé, le transpondeur détecté étant apte à continuer son émission malgré la modification du signal d'interrogation,
caractérisé en ce qu'après identification du transpondeur détecté,
l'organe interrogateur, d'une part, modifie à nouveau son signal d'interrogation de manière à prolonger l'état de veille des transpondeurs silencieux, et d'autre part, émet une commande vers le transpondeur identifié, les transpondeurs silencieux étant à nouveau aptes à interpréter la modification du signal d'interrogation comme une demande de silence prolongé,
et en ce qu'en fin d'émission de son identifiant, le transpondeur détecté se met en écoute pendant une durée déterminée durant laquelle il est apte à interpréter puis à exécuter la commande émise par l'organe interrogateur.

Selon une autre caractéristique, chaque transpondeur comporte des moyens de comptage du temps et des moyens de réinitialisation du comptage du temps sur réception d'une modification du signal d'interrogation.

Selon une autre caractéristique, les moyens de comptage du temps sont aptes à déterminer une durée prédéterminée de mise en écoute du transpondeur détecté, durant laquelle ledit transpondeur n'émet aucun signal.

Le système de communication selon la présente invention est également caractérisé en ce qu'après l'exécution d'une commande, le transpondeur identifié se remet en écoute pendant la durée prédéterminée afin de permettre une nouvelle phase de communication, une nouvelle modification du signal d'interrogation réinitialisant l'état de veille des transpondeurs non identifiés, et une nouvelle commande étant émise par l'organe interrogateur, interprétée et exécutée par le transpondeur identifié.

Selon une autre caractéristique, le transpondeur identifié reprend l'émission cyclique de son identifiant après un temps de pause aléatoire dans le cas où aucune modification du signal d'interrogation n'est intervenue pendant la durée de mise en écoute.

Selon une autre caractéristique, la modification du signal d'interrogation consiste en une coupure dans l'émission du signal d'interrogation émis de façon continue.

Selon une autre caractéristique, la commande émise par l'organe interrogateur comprend des informations à lire et/ou à écrire et/ou à exécuter par le transpondeur identifié.

La présente invention a également pour objet un procédé de communication entre un organe interrogateur et une pluralité de transpondeurs comprenant les étapes suivantes:
a- émission d'un signal d'interrogation continu par l'organe interrogateur;
b- émission d'une trame de début de message par un transpondeur;
c- détection de cette trame par l'organe interrogateur;
d- modification du signal d'interrogation de manière à mettre en état de veille les transpondeurs silencieux pour une durée D1 de manière à les empêcher d'émettre leur signal d'identification;
e- lecture du message d'identification par l'organe interrogateur;
   le procédé étant caractérisé en ce qu'il comporte en outre les étapes suivantes:
f- mise en écoute du transpondeur identifié;
g- modification du signal d'interrogation de manière à réinitialiser l'état de veille des transpondeurs silencieux pour une durée D2 de manière à les empêcher d'émettre leur signal d'identification;
h- émission d'une commande par l'organe interrogateur vers le transpondeur identifié;
i- exécution de la commande par le transpondeur identifié;
j- émission de la réponse du transpondeur.

Selon une autre caractéristique, le procédé de communication comprend en outre une pluralité d'étapes supplémentaires, ces étapes supplémentaires consistant à remettre en écoute le transpondeur identifié après l'étape j et à réaliser en boucle les opérations g à j de manière à effectuer une pluralité d'opérations sur le transpondeur identifié.

Selon une autre caractéristique, la durée D2 est égale à la durée D1 ajoutée au temps d'exécution d'une opération, la durée D1 correspondant à la durée d'émission de l'identifiant multipliée par un nombre aléatoire.

Le système de communication avec maintien d'un canal anticollision selon l'invention présente l'avantage de permettre d'échanger des informations entre un interrogateur et un transpondeur de façon fiable et facile à mettre en oeuvre.

Le système selon l'invention permet d'utiliser des transpondeurs plus perfectionnés nécessitant des transferts de données entre l'interrogateur et le transpondeur identifié tels que par exemple la présentation de clés (mots de passe, authentification, reconnaissance mutuelle), l'écriture d'information sur le transpondeur (mise à jour de registre), le chargement ou la mise à jour de programmes, la lecture d'information dans la mémoire du transpondeur.

D'autres aspects et avantages de l'invention apparaîtront dans la suite de la description en référence aux figures dans lesquelles:
La figure 1 est un diagramme du mode de fonctionnement d'un système anticollision selon un premier principe connu de l'état de la technique.
La figure 2 est un diagramme du mode de fonctionnement d'un système anticollision selon un second principe connu de l'état de la technique.
La figure 3 est un diagramme du mode de fonctionnement d'un système anticollision selon la présente invention.
La figure 4 est un diagramme des opérations effectuées par l'organe interrogateur selon l'invention.
La figure 5 est un diagramme des opérations effectuées par un transpondeur selon l'invention.
La figure 6 est un schéma des étapes d'émission d'un signal par un transpondeur selon la présente invention.
Les figures 1 et 2 ont précédemment été décrites et représentent des principes de mise en oeuvre de systèmes anticollision connus de l'état de la technique.
La figure 3 représente la mise en oeuvre du système de communication selon la présente invention avec maintien d'un canal anticollision ouvert entre un organe interrogateur et un transpondeur en lecture/écriture.

La mise en oeuvre du système selon la présente invention se décompose en deux phases distinctes. La première étape consiste dans une étape d'identification dont la mise en oeuvre est déjà connue et a précédemment été décrite lors de l'exposé de la figure 2.

La seconde étape est une étape de réalisation d'une opération OP par le transpondeur identifié TR1 suite à une commande C émise par l'interrogateur INT.

Le transpondeur identifié TR1 lors de la première étape se place dans un mode écoute E. Si l'organe interrogateur INT a une commande à transmettre à ce transpondeur donné, il procède à une nouvelle modification M dans l'émission de son signal d'interrogation. Cette nouvelle modification M, une coupure de quelques microsecondes par exemple, réinitialise l'état de veille des autres transpondeurs silencieux pendant un délai D2.

Un canal anticollision étant ainsi maintenu ouvert entre un transpondeur identifié TR1 et l'organe interrogateur, ce dernier peut émettre une commande C qui sera interprétée par le transpondeur TR1 en mode écoute E, puis exécutée EXE. Le transpondeur émet ensuite un signal R en réponse à l'exécution de l'opération commandée, puis se remet dans un mode d'écoute E afin de recevoir le cas échéant une nouvelle commande C.

Si aucune nouvelle commande n'est émise par l'organe interrogateur pendant le temps de mise en écoute E du transpondeur identifié TR1, ce dernier reprendra l'émission cyclique de son identifiant Id après un temps de pause P aléatoire.

Le procédé de fonctionnement du système de communication selon la présente invention permet ainsi à un organe interrogateur et à un transpondeur donné de dialoguer aussi longtemps que nécessaire sans risque d'interruption par l'émission d'un identifiant provenant d'un autre transpondeur.

Les transpondeurs mis en oeuvre dans la présente invention sont des transpondeurs comportant une mémoire qui peut être accessible en lecture et en écriture ou en lecture seulement. Il est ainsi possible de lire et/ou d'écrire des données contenues dans la mémoire du microcircuit du transpondeur.

Selon un mode de réalisation préférentielle de l'invention, l'organe interrogateur émet un signal d'interrogation de manière continue avec une puissance d'environ 1 Watt et avec une fréquence approximative de 13.5 MHz par exemple.

Les transpondeurs utilisés sont bien connus de l'homme du métier.

Les transpondeurs utilisés dans la mise en oeuvre de la présente invention comportent au moins des moyens de réception et d'émission, une mémoire, et un module de gestion de mémoire associé.

Selon une variante de réalisation, les transpondeurs peuvent être alimentés par l'énergie du signal d'interrogation émis par l'organe interrogateur. Ils modulent alors une partie du signal reçu avec un générateur de code pour émettre leur signal d'identification.

Selon une autre variante, les transpondeurs peuvent avoir une alimentation indépendante et générer leur propre signal d'identification.

Les transpondeurs peuvent également utiliser deux antennes distinctes pour émettre et recevoir ou une seule antenne. Une antenne unique peut aussi permettre de générer le signal d'identification en modulant la réflectivité.

Avantageusement, les transpondeurs comportent également des moyens de comptage afin de déterminer les temps de pause P, les durées de mise en état de veille D1 et D2 et les durées de mise en écoute D du transpondeur identifié. Ces moyens de comptage peuvent consister dans un circuit diviseur de l'horloge de l'interrogateur ou dans un circuit comprenant une résistance et un condensateur.

L'organe interrogateur est également bien connu de l'homme du métier.

L'organe interrogateur comprend un amplificateur des messages provenant des transpondeurs, un circuit d'extraction des données traitées dans un microprocesseur et un générateur d'horloge.

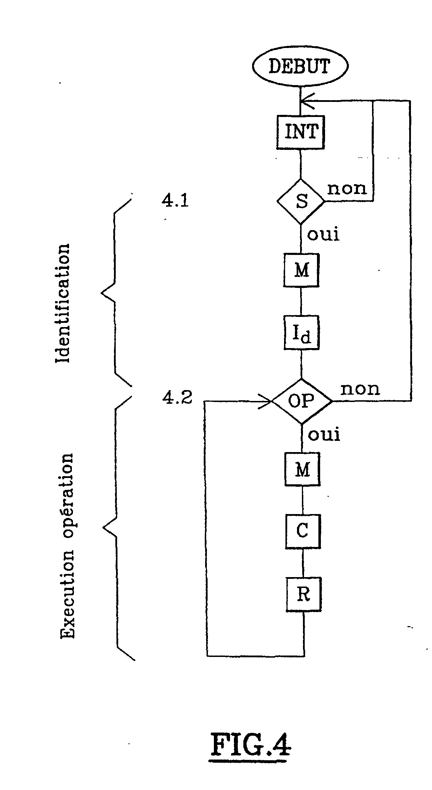

La figure 4 illustre les différentes étapes des opérations effectuées par l'organe interrogateur selon la présente invention.

L'organe interrogateur émet un signal d'interrogation INT de façon continue comme cela a déjà été indiqué précédemment.

Une première étape (4.1) consiste à procéder à l'identification d'un transpondeur suite à l'émission d'une trame de début de message S.

Suite à la réception de cette trame de début de message S, l'organe interrogateur procède à une modification M de son signal d'interrogation INT qui sera interprétée comme une commande de silence pour les transpondeurs en pause alors qu'elle est transparente pour le transpondeur en cours d'émission.

La deuxième étape (4.2) débute si une opération particulière OP doit être effectuée par le transpondeur identifié. Le cas échéant, l'organe interrogateur procède à une nouvelle modification M de son signal d'interrogation INT.

Une commande C est ensuite émise par l'organe interrogateur puis interprétée et exécutée par le transpondeur identifié TR1.

L'organe interrogateur est alors en attente de la réponse R du transpondeur. Si une autre commande doit être exécutée par ce transpondeur TR1, l'organe interrogateur procède à une nouvelle modification M de son signal d'interrogation INT et à l'émission de la nouvelle commande C pour un nouveau cycle de communication (4.2).

Alternativement, l'organe interrogateur se replace dans un mode d'attente d'une trame de début de message S pour renouveler l'opération d'identification avec un autre transpondeur.

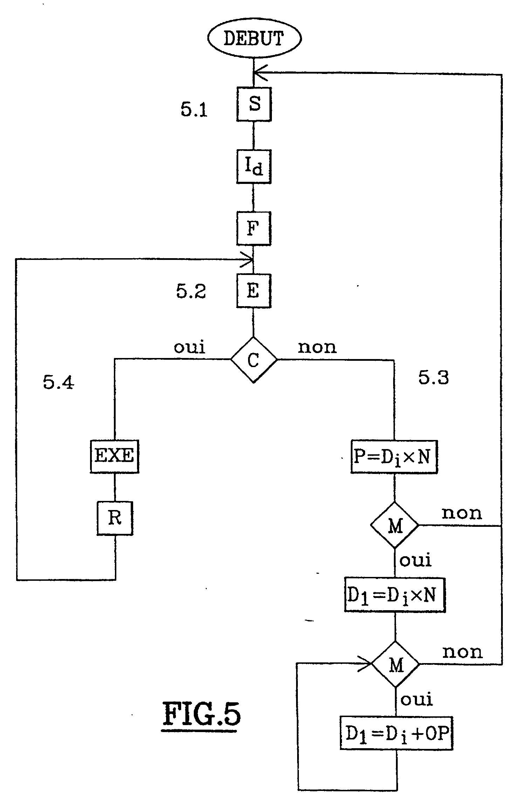

La figure 5 illustre schématiquement les différentes opérations effectuées par un transpondeur selon la présente invention.

Selon un mode de réalisation préférentiel, le transpondeur reçoit un signal d'interrogation INT qu'il transforme par modulation en signal d'identification Id émis sur une durée Di de façon cyclique et avec des temps de pause P de durée aléatoire.

La première étape (5.1) constitue une étape d'identification par l'organe interrogateur.

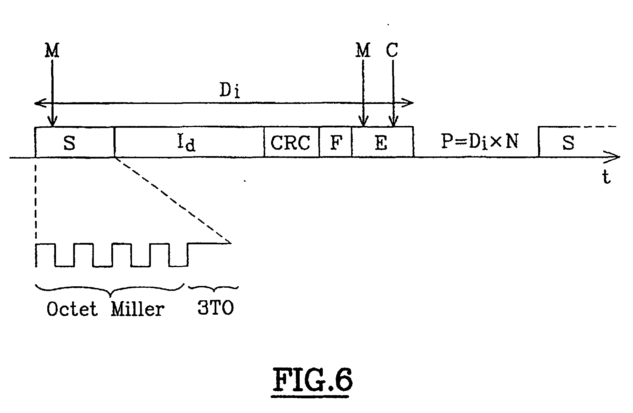

La figure 6 illustre les étapes d'émission d'un signal par le microcircuit d'un transpondeur.

L'émission du signal d'identification débute par une trame de début de message S. Cette trame est avantageusement composée d'un octet dont la valeur est 0, codée selon le principe Miller, c'est à dire d'un octet constitué de 8 changements d'état successifs. Cet octet permet de signaler à l'organe interrogateur le début de l'émission d'un message. Cet octet est suivi d'un code de violation précédent l'émission de l'identification, ledit code de violation étant d'une durée de 3 bit sans changement d'état.

Une modification M dans l'émission du signal d'interrogation INT est commandée par l'organe interrogateur pendant la réception de cette trame de début de message S. La modification M intervient aussi rapidement que possible après réception et reconnaissance d'une trame de début de message S.

Cette modification M est transparente pour le transpondeur en cours d'émission alors qu'elle est interprétée comme une commande de silence par les autres transpondeurs.

Le message d'identification Id est alors émis suivi d'une somme pour contrôle CRC et d'une information de fin de message F. Cette information de fin de message est généralement constituée par un bit d'arrêt à 0 ou à 1 selon la convention adoptée.

Une deuxième étape (5.2) débute par une mise en écoute E permettant au transpondeur de recevoir une commande en provenance de l'organe interrogateur qui diffère du signal d'interrogation. Cette mise en écoute E se caractérise par un état actif du microcircuit du transpondeur sans émission de signal.

Si aucune commande C n'intervient pendant l'écoute E, le transpondeur reprendra l'émission cyclique de son identifiant Id après un temps de pause P aléatoire.

Dans le cas contraire (5.4), la commande C émise par l'organe interrogateur est exécutée EXE par le transpondeur.

Selon les applications, cette commande consiste dans un échange de mot de passe, dans une écriture ou une lecture d'information dans la mémoire du microcircuit du transpondeur, dans le chargement ou la modification d'un programme contenu dans la mémoire du microcircuit du transpondeur.

Le transpondeur émet ensuite une réponse R adéquate, puis se replace dans un mode de mise en écoute E.

Plusieurs opérations peuvent ainsi être exécutées par un transpondeur donné aussi souvent qu'une commande C intervient pendant l'état d'écoute E du transpondeur TR1.

Parallèlement (5.5), les transpondeurs en pause TRn au moment de l'émission d'une trame de début de message S par un autre transpondeur capteront une première modification M dans le signal d'interrogation INT et retarderont l'émission de leur propre identifiant par une mise en veille pendant une durée D1 égale à la durée d'émission d'un identifiant Di multipliée par un nombre aléatoire N.

La modification M du signal d'interrogation INT intervient quelques microsecondes après la détection d'une trame de début de message S d'un transpondeur donné TR1, c'est à dire pendant la pause P des autres transpondeurs TRn.

Si une nouvelle modification du signal M intervient pendant la durée D1 de mise en veille des autres transpondeurs TRn, ces derniers réinitialiseront le comptage de leur état de veille et retarderont ainsi l'émission de leur identifiant sur une durée D2 égale à la durée D1 à laquelle se rajoute la durée d'exécution d'une opération OP.

Cette durée d'exécution d'une opération OP correspond à la durée d'exécution de la commande C par le microcircuit du transpondeur plus la durée d'émission d'une réponse R du transpondeur vers l'organe interrogateur.

La relance du retard sur une durée D2 peut être renouvelée aussi souvent que nécessaire afin de maintenir un canal anticollision ouvert entre l'organe interrogateur et un transpondeur donné.

## Revendications

1. Système de communication entre un organe interrogateur et une pluralité de transpondeurs (TRn),
l'organe interrogateur étant apte à détecter un début d'émission (S) d'un transpondeur (TR1) puis à modifier (M) son signal d'interrogation (INT) de manière à maintenir les autres transpondeurs (TRn) en état de veille,
les transpondeurs silencieux (TRn) étant aptes à interpréter la modification (M) du signal d'interrogation (INT) comme une commande de silence prolongé, le transpondeur détecté (TR1) étant apte à continuer son émission malgré la modification (M) du signal d'interrogation (INT),
**caractérisé en ce qu'**après identification du transpondeur détecté (TR1),
l'organe interrogateur, d'une part, modifie à nouveau (M) son signal d'interrogation (INT) de manière à prolonger l'état de veille des transpondeurs silencieux (TRn), et d'autre part, émet une commande (C) vers le transpondeur identifié (TR1), les transpondeurs silencieux (TRn) étant à nouveau aptes à interpréter la modification (M) du signal d'interrogation (INT) comme une demande de silence prolongé,
et **en ce qu'**en fin d'émission de son identifiant (Id), le transpondeur détecté (TR1) se met en écoute (E) pendant une durée déterminée (D) durant laquelle il est apte à interpréter puis à exécuter la commande (C) émise par l'organe interrogateur.

2. Système de communication selon la revendication 1, **caractérisé en ce que** chaque transpondeur (TRn) comporte des moyens de comptage du temps et des moyens de réinitialisation du comptage du temps sur réception d'une modification (M) du signal d'interrogation (INT).

3. Système de communication selon la revendication 2, **caractérisé en ce que** les moyens de comptage du temps sont aptes à déterminer une durée prédéterminée (D) de mise en écoute (E) du transpondeur détecté (TR1), durant laquelle ledit transpondeur (TR1) n'émet aucun signal.

4. Système de communication selon la revendication 1, **caractérisé en ce qu'**après l'exécution (EXE) d'une commande (C), le transpondeur identifié (TR1) se remet en écoute (E) pendant la durée (D) prédéterminée afin de permettre une nouvelle phase de communication, une nouvelle modification (M) du signal d'interrogation (INT) réinitialisant l'état de veille des transpondeurs non identifiés (TRn), et une nouvelle commande (C) étant émise par l'organe interrogateur, interprétée et exécutée par le transpondeur identifié (TR1).

5. Système de communication selon la revendication 1 ou la revendication 4, **caractérisé en ce que** le transpondeur identifié (TR1) reprend l'émission cyclique de son identifiant (Id) après un temps de pause (P) aléatoire dans le cas où aucune modification (M) du signal d'interrogation n'est intervenue pendant la durée (D) de mise en écoute (E).

6. Système de communication selon l'une quelconque des revendications précédentes, **caractérisé en ce que** la modification (M) du signal d'interrogation consiste en une coupure dans l'émission du signal d'interrogation (INT) émis de façon continue.

7. Système de communication selon l'une quelconque des revendications précédentes, **caractérisé en ce que** la commande (C) émise par l'organe interrogateur comprend des informations à lire et/ou à écrire et/ou à exécuter par le transpondeur identifié (TR1).

8. Procédé de communication entre un organe interrogateur et une pluralité de transpondeurs (TRn) comprenant les étapes suivantes:
a- émission d'un signal d'interrogation (INT) continu par l'organe interrogateur;
b- émission d'une trame de début de message (S) par un transpondeur (TR1);
c- détection de cette trame (S) par l'organe interrogateur (INT);
d- modification (M) du signal d'interrogation (INT) de manière à mettre en état de veille les transpondeurs silencieux (TRn) pour une durée D1 de manière à les empêcher d'émettre leur signal d'identification;
e- lecture du message d'identification (Id) par l'organe interrogateur;
le procédé étant **caractérisé en ce qu'**il comporte en outre les étapes suivantes:
f- mise en écoute (E) du transpondeur identifié (TR1);
g- modification (M) du signal d'interrogation (INT) de manière à réinitialiser l'état de veille des transpondeurs silencieux (TRn) pour une durée D2 de manière à les empêcher d'émettre leur signal d'identification (Idn);
h- émission d'une commande (C) par l'organe interrogateur (INT) vers le transpondeur identifié (TR1);
i- exécution (EXE) de la commande (C) par le transpondeur identifié (TR1);
j- émission de la réponse (REP) du transpondeur (TR1).

9. Procédé de communication selon la revendication 8 **caractérisé en ce qu'**il comprend en outre une pluralité d'étapes supplémentaires, ces étapes supplémentaires consistant à remettre en écoute le transpondeur identifié (TR1) après l'étape j et à réaliser en boucle les opérations g à j de manière à effectuer une pluralité d'opérations sur le transpondeur identifié (TR1).

10. Procédé de communication selon la revendication 8 **caractérisé en ce que** la durée D2 est égale à la durée D1 ajoutée au temps d'exécution d'une opération (OP), la durée D1 correspondant à la durée d'émission de l'identifiant (Di) multipliée par un nombre aléatoire (N).

## Claims

1. A system for communicating between an interrogating device and a plurality of transponders (TRn),
the interrogating device being capable of detecting a start of sending (S) of a transponder (TR1) and then of modifying (M) its interrogation signal (INT) so as to maintain the other transponders (TRn) in standby state,
the silent transponders (TRn) being capable of interpreting the modification (M) of the interrogation signal (INT) as an extended silence command, the detected transponder (TR1) being capable of continuing its sending despite the modification (M) of the interrogation signal (INT),
**characterised in that**, after identification of the detected transponder (TR1),
the interrogating device, on the one hand, once again modifies (M) its interrogation signal (INT) so as to extend the standby state of the silent transponders (TRn) and, on the other hand, sends a command (C) to the identified transponder (TR1), the silent transponders (TRn) once again being capable of interpreting the modification (M) of the interrogation signal (INT) as an extended silence request,
and **in that**, at the end of sending its identifier (Id), the detected transponder (TR1) sets itself into listening mode (E) for a given duration (D) during which it is capable of interpreting and then executing the command (C) sent by the interrogating device.

2. A communication system according to Claim 1, **characterised in that** each transponder (TRn) has means of counting the time and means of reinitialising the counting of the time upon receiving a modification (M) of the interrogation signal (INT).

3. A communication system according to Claim 2, **characterised in that** the time counting means are capable of determining a predetermined listening situation (E) duration (D) for the detected transponder (TR1), during which said transponder (TR1) sends no signal.

4. A communication system according to Claim 1, **characterised in that**, after the execution (EXE) of a command (C), the identified transponder (TR1) sets itself into listening mode (E) again for the predetermined duration (D) in order to allow a new communication phase, a new modification (M) of the interrogation signal (INT) reinitialising the standby state of the non-identified transponders (TRn), and a new command (C) being sent by the interrogating device, interpreted and executed by the identified transponder (TR1).

5. A communication system according to Claim 1 or Claim 4, **characterised in that** the identified transponder (TR1) resumes the cyclic sending of its identifier (Id) after a random pause time (P) in the case where no modification (M) of the interrogation signal occurred during the listening situation (E) duration (D).

6. A communication system according to any one of the preceding claims, **characterised in that** the modification (M) of the interrogation signal consists of a mute in the sending of the continuously sent interrogation signal (INT).

7. A communication system according to any one of the preceding claims, **characterised in that** the command (C) sent by the interrogating device comprises information to be read and/or written and/or executed by the identified transponder (TR1).

8. A method of communicating between an interrogating device and a plurality of transponders (TRn) comprising the following steps:
a - sending of a continuous interrogation signal (INT) by the interrogating device;
b - sending of a start of message frame (S) by a transponder (TR1);
c - detection of this frame (S) by the interrogating device (INT);
d - modification (M) of the interrogation signal (INT) so as to set the silent transponders (TRn) into standby state for a duration D1 so as to prevent them from sending their identification signal;
e - reading of the identification message (Id) by the interrogating device;
the method being **characterised in that** it also has the following steps:
f - setting the identified transponder (TR1) into listening mode (E);
g - modification (M) of the interrogation signal (INT) so as to reinitialise the standby state of the silent transponders (TRn) for a duration D2 so as to prevent them from sending their identification signal (Idn);
h - sending of a command (C) by the interrogating device (INT) to the identified transponder (TR1);
i - execution (EXE) of the command (C) by the identified transponder (TR1);
j - sending of the reply (REP) from the transponder (TR1).

9. A communication method according to Claim 8, **characterised in that** it also comprises a plurality of supplementary steps, these supplementary steps consisting of setting the identified transponder (TR1) into listening mode again after the step j and of carrying out the operations g to j in a loop so as to perform a plurality of operations on the identified transponder (TR1).

10. A communication method according to Claim 8, **characterised in that** the duration D2 is equal to the duration D1 added to the execution time for one operation (OP), the duration D1 corresponding to the duration for sending the identifier (Di) multiplied by a random number (N).

## Patentansprüche

1. Kommunikationssystem zwischen einem abfragenden Organ und einer Mehrzahl von Transpondern (TRn), wobei das abfragende Organ einen Sendeanfang (S) eines Transponders (TR1) erfassen und dann sein Abfragesignal (INT) so modifizieren (M) kann, dass die anderen Transponder (TRn) im Standby-Modus bleiben, wobei die schweigenden Transponder (TRn) die Modifikation (M) des Abfragesignals (INT) als einen längeren Schweigebefehl interpretieren können, wobei der erfasste Transponder (TR1) seine Sendung trotz der Modifikation (M) des Abfragesignals (INT) fortsetzen kann, **dadurch gekennzeichnet, dass** nach der Identifikation des erfassten Transponders (TR1) das abfragende Organ einerseits erneut sein Abfragesignal (INT) modifiziert (M), um den Standby-Zustand der schweigenden Transponder (TRn) zu verlängern, und andererseits einen Befehl (C) an den identifizierten Transponder (TR1) sendet, wobei die schweigenden Transponder (TRn) wiederum die Modifikation (M) des Abfragesignals (INT) als einen längeren Schweigebefehl interpretieren können, und dadurch, dass der erfasste Transponder (TR1) am Ende der Sendung seiner Identifikation (Id) während einer bestimmten Zeit (D) in den Empfangsmodus (E) geht, während der er den vom abfragenden Organ gesendeten Befehl (C) interpretieren und dann ausführen kann.

2. Kommunikationssystem nach Anspruch 1, **dadurch gekennzeichnet, dass** jeder Transponder (TRn) Zeitzählmittel und Neuinitialisierungsmittel der Zeitzählung nach Empfang einer Modifikation (M) des Abfragesignals (INT) umfasst.

3. Kommunikationssystem nach Anspruch 2, **dadurch gekennzeichnet, dass** die Zeitzählmittel eine vorgegebene Dauer (D) des Empfangsmodus (E) des erfassten Transponders (TR1) bestimmen können, während der der besagte Transponder (TR1) kein Signal sendet.

4. Kommunikationssystem nach Anspruch 1, **dadurch gekennzeichnet, dass** der identifizierte Transponder (TR1) nach Ausführung (EXE) eines Befehls (C) während der vorgegebenen Dauer (D) wieder in den Empfangsmodus (E) geht, um eine neue Kommunikationsphase zu ermöglichen, wobei eine erneute Modifikation (M) des Abfragesignals (INT) den Standby-Zustand der nicht identifizierten Transponder (TRn) neu initialisiert, und wobei vom abfragenden Organ ein neuer Befehl (C) gesendet wird, der vom identifizierten Transponder (TR1) interpretiert und ausgeführt wird.

5. Kommunikationssystem nach Anspruch 1 oder Anspruch 4, **dadurch gekennzeichnet, dass** der identifizierte Transponder (TR1) die zyklische Sendung seiner Identifikation (Id) nach einer zufälligen Pausezeit (P) wieder aufnimmt, wenn während der Dauer (D) des Empfangszustands (E) keine Modifikation (M) des Abfragesignals erfolgt ist.

6. Kommunikationssystem nach einem der vorherigen Ansprüche, **dadurch gekennzeichnet, dass** die Modifikation (M) des Abfragesignals in einer Unterbrechung der Sendung des kontinuierlich gesendeten Abfragesignals (INT) besteht.

7. Kommunikationssystem nach einem der vorherigen Ansprüche, **dadurch gekennzeichnet, dass** der von abfragenden Organ gesendete Befehl (C) von dem identifizierten Transponder (TR1) zu lesende und/oder zu schreibende und/oder auszuführende Informationen umfasst.

8. Kommunikationsverfahren zwischen einem abfragenden Organ und einer Mehrzahl von Transpondern (TRn), das die folgenden Etappen umfasst:
a- Sendung eines kontinuierlichen Abfragesignals (INT) durch das abfragende Organ;
b- Sendung eines Anfangsrasters einer Meldung (S) durch einen Transponder (TR1);
c- Erfassung dieses Rasters (S) durch das abfragende Organ (INT);
d- Modifikation (M) des Abfragesignals (INT), so dass die schweigenden Transponder (TRn) für eine Dauer D1 in den Standby-Zustand versetzt werden, um sie daran zu hindern, ihr Identifikationssignal zu senden;
e- Lesen der Identifikationsmeldung (Id) durch das abfragende Organ;
wobei das Verfahren **dadurch gekennzeichnet ist, dass** es ferner die folgenden Etappen umfasst:
f- Schalten des identifizierten Transponders in den Empfangsmodus (E);
g- Modifikation (M) des Abfragesignals (INT), um den Standby-Zustand der schweigenden Transponder (TRn) für eine Dauer D2 neu zu initialisieren, um sie daran zu hindern, ihr Identifikationssignal (Idn) zu senden;
h- Sendung eines Befehls (C) durch das abfragende Organ (INT) an den identifizierten Transponder (TR1);
i- Ausführung (EXE) des Befehls (C) durch den identifizierten Transponder (TR1);
j- Sendung der Antwort (REP) des Transponders (TR1).

9. Kommunikationsverfahren nach Anspruch 8, **dadurch gekennzeichnet, dass** es ferner eine Mehrzahl von zusätzlichen Etappen umfasst, wobei diese zusätzlichen Etappen darin bestehen, den identifizierten Transponder (TR1) nach der Etappe j wieder in den Empfangsmodus zu schalten und die Operationen g bis j in Schleife zu realisieren, um mit dem identifizierten Transponder (TR1) eine Mehrzahl von Operationen durchzuführen.

10. Kommunikationsverfahren nach Anspruch 8, **dadurch gekennzeichnet, dass** die Dauer D2 der der Ausführungszeit einer Operation (OP) hinzugefügten Dauer D1 entspricht, wobei die Dauer D1 der Sendedauer der Identifikation (Di) multipliziert mit einer Zufallszahl (N) entspricht.
